Europäisches Patentamt

European Patent Office

Office européen des brevets

(19)

(11) Numéro de publication: **0 110 834**
**A2**

# (12) DEMANDE DE BREVET EUROPEEN

(21) Numéro de dépôt: **83810544.3**

(22) Date de dépôt: **22.11.83**

(51) Int. Cl.³: **G 01 N 21/67,** G 01 N 33/20

(30) Priorité: **29.11.82 DE 3244164**

(43) Date de publication de la demande: **13.06.84**
**Bulletin 84/24**

(84) Etats contractants désignés: **AT BE CH DE FR GB IT LI LU NL SE**

(71) Demandeur: **A.R.L. APPLIED RESEARCH LABORATORIES S.A., En Vallaire, CH-1024 Ecublens (CH)**

(72) Inventeur: **Slickers, Karl, 36, rue de la Riaz, CH-1026 Echandens (CH)**

(74) Mandataire: **Moinas, Michel, Moinas & Cie 42, rue Plantamour, CH-1201 Genève (CH)**

(54) **Procédé pour déterminer les quantités d'éléments présents dans les métaux.**

(57) Le procédé sert à déterminer les quantités d'éléments présents dans les métaux, au total et tant sous forme soluble/métallique que sous forme insoluble/non-métallique, par exemple les quantités d'aluminium dans l'acier.

La surface du métal est soumise à un étincelage en l'atmosphère inerte et on enregistre simultanément, en fonction du temps, la réponse spectrale émise.

L'enregistrement obtenu présente d'abord un pic d'intensité dont on déduit la quantité d'éléments sous forme soluble ou non-métallique, puis se stabilise à une valeur stationnaire finale dont on déduit la quantité totale d'éléments présents.

La quantité sous forme soluble ou métallique s'est déduite de la surface totale ($P_1$) comprise sous le pic, de la surface ($P_2$) comprise sous la courbe d'intensité, stationnaire pour l'intervalle de temps ($t_2 - t_1$), et de la quantité totale.

ACTORUM AG

PROCEDE POUR DETERMINER
LES QUANTITES D'ELEMENTS
PRESENTS DANS LES METAUX

---

La présente invention a trait à un procédé permettant de déterminer les quantités d'éléments présents dans les métaux, par exemple l'acier, soit la quantité totale, soit les proportions d'éléments sous forme métallique et celle sous forme non-métallique. Citons l'aluminium dans l'acier comme exemple d'élément.

Pour l'acier, la coulée en continu présente le danger de formation de gaz, notamment d'oxygène, qui, réagissant avec le carbone présent dans l'acier, forme du monoxyde de carbone. Il se crée donc au sein de la matière des inclusions gazeuses qui nuisent fortement à la qualité finale de l'acier.

Pour piéger l'oxygène et l'empêcher de réagir avec le carbone, on ajoute lors de la coulée en continu, des éléments métalliques (agent désoxydant) tels que par exemple de l'aluminium. Celui-ci, réagissant avec l'oxygène, forme de l'alumine ($Al_2O_3$), insoluble, qui est métallurgiquement inactive. En revanche, l'aluminium métallique est soluble dans l'acier et est métallurgiquement actif. Mais une trop grande concentration en agent désoxydant dégraderait les qualités de cet acier. On conçoit donc qu'il y ait un compromis à trouver dans les quantité d'aluminium à ajouter, en léger excès pour être sûr de faire disparaître totalement l'oxygène, mais pas trop en excès de façon à ne pas affecter la qualité de l'acier.

La présente invention propose un procédé, qui permet le contrôle en continu et quasi immédiat de la quantité d'élément, présent au total, ainsi que de la proportion d'élément sous forme insoluble et celle sous forme soluble. Les procédés classiques en effet, par analyse chimique par exemple, ne permettent pas d'obtenir des résultats immédiats. D'autres procédés classiques, tels les méthodes électro-chimiques ou la spectrochimie des rayons X ne sont pas assez mûres techniquement pour être utilisées comme méthodes de routine.

Le procédé selon l'invention se caractérise par le fait qu'on soumet la surface du métal à un étincelage en atmosphère inerte et qu'on enregistre simultanément, en fonction du temps, la réponse spectrale émise. L'enregistrement obtenu présente d'abord un pic d'intensité dont on déduit la quantité d'éléments sous forme insoluble, puis se stabilise à une valeur stationnaire finale dont on déduit la quantité totale d'éléments présents.

De la surface totale $(P_1)$ comprise sous le pic, de la surface $(P_2)$ comprise sous la courbe d'intensité, stationnaire dans l'intervalle de temps $(t_2 - t_1)$, et de la quantité totale $(C_t)$, on déduit la proportion d'élément présent sous forme métallique/soluble. L'intervalle $(t_2 - t_1)$ est en général du même ordre de grandeur que $t_1$. De préférence, $t_1 = t_2 - t_1$.

En choisissant une ou plusieurs raies spectrales déterminées, le procédé permet l'analyse simultanée de plusieurs éléments. Dans ce cas, on procède à autant d'enregistrements qu'il y a de raies spectrales sélectionnées. La valeur de la surface comprise sous le pic ( et limitée par la valeur stationnaire finale,) est sensiblement proportionnelle, dans une large gamme d'étalonnage, à la quantité d'élément insoluble. Pour sa part, la valeur stationnaire finale permet de déterminer la quantité totale d'élément. Le rapport de la surface comprise sous l'intensité stationnaire finale mesurée durant l'intervalle $(t_2 - t_1)$ et de la surface comprise sous le pic permet de déterminer avec une bonne approximation la proportion d'élément présent sous forme métallique (soluble).

On peut soit mesurer l'intensité absolue de la raie spectrale choisie, soit le rapport de cette intensité à celle d'une autre raie spectrale appropriée.

Ce procédé de détermination s'applique à tous les éléments qu'on retrouve normalement dans les métaux, tel que l'aluminium, le bore, le silicium, le titane, le zirconium, le calcium, etc, dans l'acier, par exemple.

L'invention sera plus précisément décrite en relation avec la détermination de l'aluminium dans l'acier, dans l'exposé et le dessin qui suivent, donnés à titre d'exemple:

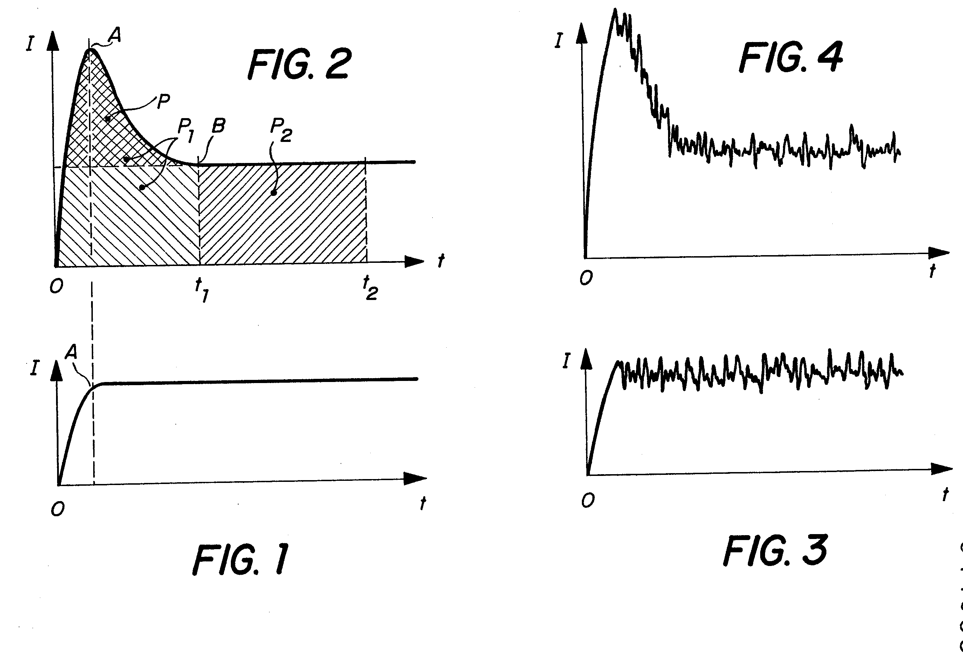

Dans ce dessin, la figure 1 représente, un enregistrement pour un échantillon d'acier où tout l'aluminium se trouve sous forme soluble.

La figure 2 en revanche représente un enregistrement d'un échantillon comprenant de l'aluminium sous forme soluble et de l'aluminium sous forme insoluble.

Pour la clarté de l'exposé, ces courbes appelées courbes d'étincelage résultent d'un lissage des courbes réelles, dont les exemples sont donnés sur la figure 3 (correspondant à la figure 1) et sur la figure 4 (correspondant à la figure 2).

Sur la figure 1, où l'intensité de la raie spectrale se trouve reportée verticalement (en ordonnée), tandis que le temps est reporté horizontalement (en absisse), on distingue d'abord la montée de la courbe jusqu'à un point A. Le temps compris entre l'origine et la projection de A sur l'absisse est le temps d'étincelage. Par la suite, on constate que la courbe se stabilise à un plancher, appelé valeur stationnaire finale, qui indique la quantité d'aluminium total présent dans l'échantillon d'acier.

Dans la figure 2, on retrouve le point A correspondant à la fin du temps d'étincelage, puis la courbe redescend jusqu'à un point B, début de l'état stationnaire. Le temps compris entre A et B est un temps qui correspond à l'homogénéisation de l'échantillon. En effet, celui-ci subit une fusion de surface et sur quelque 30 à 50 microns de profondeur, en sorte que la surface étincelée devient homogène et donne une réponse qui correspond à la valeur stationnaire finale.

La surface (P) comprise sous le pic d'intensité, et limitée par la valeur stationnaire finale, est sensiblement proportionnelle à la quantité d'aluminium non-métallique présent. Elle peut être considérée comme la différence entre la surface totale ($P_1$) comprise sous le pic et la surface ($P_2$) correspondant à la valeur stationnaire finale. La surface ($P_2$) correspond à l'intégrale de la valeur stationnaire finale pour l'intervalle de temps ($t_2 - t_1$) (Fig.2). La quantité totale d'aluminium ($C_t$) est sensiblement proportionnelle à l'integrale de l'intensité à l'état stationnaire (surface $P_2$). Le rapport de l'integrale de l'intensité à l'état stationnaire (surface $P_2$) et de la surface totale $P_1$

comprise sous le pic donne un facteur F. En multipliant la quantité totale d'aluminium par F on obtient la quantité $C_s$ d'élément métallique.

Par suite de la distribution inhomogène de l'aluminium non-métallique, il est préférable de déduire la quantité d'aluminium insoluble de la différence entre l'aluminium total et l'aluminium soluble.

Comme on peut le constater, ces mesures sont immédiates et permettent donc d'intervenir sans retard en amont de la fabrication, de façon à réajuster la quantité d'aluminium ajoutée. Typiquement, les temps d'étincelage sont proches de 15s environ.

On utilise des décharges gazeuses supercritiques en atmosphère d'argon. Pour déterminer la quantité d'aluminium, ce sont les raies spectrales de longueur d'ondes 394,4 nm dans l'acier qui sont les plus intéressantes. Pour le bore par exemple, on utilisera de préférence la raie spectrale de longueur d'ondes 189,64 nm.

Les figures 3 et 4, comme indiqué plus haut, donnent l'allure des enregistrements réels.

La figure 3 correspond à une quantité totale d'aluminium de 540 ppm avec une proportion non-métallique de moins de 20 ppm, tandis que la Figure 4 correspond à une quantité totale d'aluminium de 560 ppm avec une proportion non-métallique de 200 ppm.

REVENDICATIONS

1. Procédé pour déterminer les quantités d'éléments présents dans les métaux, au total et tant sous forme soluble/métallique que sous forme insoluble ou non-métallique, caractérisé par le fait qu'on soumet la surface du métal à un étincelage en atmosphère inerte et qu'on enregistre simultanément, en fonction du temps, la réponse spectrale émise, l'enregistrement obtenu présentant d'abord un pic d'intensité dont on déduit la quantité d'éléments sous forme insoluble ou non-métallique, puis se stabilisant à une valeur stationnaire finale dont on déduit la quantité totale ($C_t$) d'éléments présents, la quantité ($C_s$) sous forme soluble/métallique se déduisant de la surface totale ($P_1$) comprise sous le pic, de la surface ($P_2$) comprise sous la courbe d'intensité, stationnaire pour l'intervalle de temps ($t_2 - t_1$), et de la quantité totale ($C_t$).

2. Procédé selon la revendication 1, caractérisé par le fait qu'on sélectionne pour l'enregistrement une raie donnée, de façon à déterminer les quantités d'un seul élément.

3. Procédé selon la revendication 1 caractérisé par le fait qu'on sélectionne plusieurs raies spectrales, chacune donnant un enregistrement, de façon à déterminer simultanément les quantités de plusieurs éléments.

4. Procédé selon les revendications 1 à 3, caractérisé par le fait qu'on détermine soit l'intensité absolue de la raie spectrale choisie, soit le rapport de cette intensité à celle d'une autre raie spectrale appropriée.

5. Procédé selon la revendication 1, caractérisé par le fait que la quantité ($C_s$) d'élément sous forme soluble/métallique est déterminée à partir du rapport F de la surface ($P_2$) correspondant à la valeur stationnaire, à la surface totale ($P_1$), comprise sous le pic, grâce à l'expression

$$(C_s) = F \times (C_t)$$

6. Procédé selon la revendication 1, caractérisé par le fait que la quantité d'élément sous forme insoluble ou non-métallique, est déterminée grâce au fait qu'elle est sensiblement proportionnelle à la surface (P) comprise sous le pic et limitée par la valeur stationnaire finale, dans une large gamme d'étalonnage.

7. Procédé selon la revendication 1, caractérisé par le fait que la quantité totale ($C_t$) d'un élément est sensiblement proportionnelle à l'intégrale de la valeur stationnaire finale obtenue.

8. Procédé selon la revendication 1, caractérisé par le fait que la quantité d'élément sous forme insoluble ou non-métallique est déterminée à partir de la surface totale ($P_1$) comprise sous le pic et de la surface ($P_2$) correspondant à la valeur stationnaire finale.

9. Procédé selon les revendications 1, 6 et 8, caractérisé par le fait qu'on calcule la quantité d'élément ($C_s$) sous forme soluble/métallique grâce à la différence entre la quantité totale ($C_t$) et la quantité non-métallique.

10. Procédé selon les revendications 1 et 4, caractérisé par le fait que la quantité d'élément sous forme insoluble ou non-métallique est déterminée grâce à la différence entre la quantité totale ($C_t$) et la quantité d'élément sous forme soluble/métallique.

0110834

11. Procédé selon la revendication 1, caractérisé par le fait que les éléments sont choisis dans le groupe des éléments présents dans les métaux en partie sous forme métallique/soluble et en partie sous forme non-métallique ou insoluble.

0110834

FIG. 4

FIG. 3

FIG. 2

FIG. 1